# EUROPEAN PATENT APPLICATION

(11) **EP 2 071 839 A1**
(43) Date of publication of application: **17.06.2009**
(21) Application number: 07816971.1
(22) Date of filing: 25.09.2007
(51) Int. Cl.: H04N 7/16, H04N 7/173, H04L 9/00

(54) **A METHOD, A SYSTEM AND A DEVICE FOR CHANNEL AUTHORIZATION OF TELEVISION LIVING BROADCAST BY NETWORK**

(30) Priority: 25.09.2006 CN 200610139477
(71) Applicant: Huawei Technologies Co., Ltd., Longgang District Shenzhen 518129 (CN)
(72) Inventor: LI, Jincheng, Guangdong 518129 (CN); YAN, Jun, Guangdong 518129 (CN); WU, Xiangyang, Guangdong 518129 (CN)
(74) Representative: Gulde Hengelhaupt Ziebig & Schneider
(86) International application number: PCT/CN2007/070780
(87) International publication number: WO 2008/037220

(57) **Abstract**

The present invention discloses a method for channel authorization in a live IPTV service. The method includes: After a service entity receives a channel request for live IPTV service from the terminal device, an authorization entity performs an authorization check on the channel request based on user rights information; the authorization entity enables the bearer entity to execute the channel request, if the authorization check is passed. The present invention also discloses a system and an apparatus for channel authorization in a live IPTV service. The authorization entity authorizes the channel request and executes the channel request only when the authorization check is passed; otherwise, the channel request is rejected. Therefore, the problem in the prior art that an unauthorized user is able to watch the program illegally can be addressed. Moreover, the problem that a legal user is not able to watch program due to a malicious leave message sent by others can be avoided.

## Description

### FIELD OF THE INVENTION

The present invention relates to live IPTV service, and more specifically, to a method, system and apparatus for channel authorization in a live IPTV service.

### BACKGROUND

With the development of internet technology, live IPTV services which introduce traditional TV services into an IP-based network develop rapidly.

In traditional ITPV services, a user device may join or leave a channel by sending an Internet Group Management Protocol (IGMP) message to a multicast router of an adjacent user at the network side. For instance, an IGMP Join message is used to request for watching a program in a certain TV channel. After the multicast router receives the IGMP Join message, the multicast router forwards a corresponding channel program to the user equipment. An IGMP Leave message is used to stop watching a program in a certain channel. The multicast router may stop forwarding programs to the user equipment based on the IGMP Leave message.

The Next Generation Network (NGN) is an integrated network based on packet technology. Relying primarily on packet switching, the NGN adopts an architecture in which the bearing function and the controlling function are separated. The NGN inherits all the original services from the public switched telephone network and the service capability from the mobile network as well. Therefore, the NGN integrates the merits of fixed telephone networks, mobile telephone networks and IP networks, and allows the analog users, digital users, mobile users, ADSL users, ISDN users, IP narrowband network users, IP broadband network users, and even users who gain access through satellite to communication with one another as a member of the NGN.

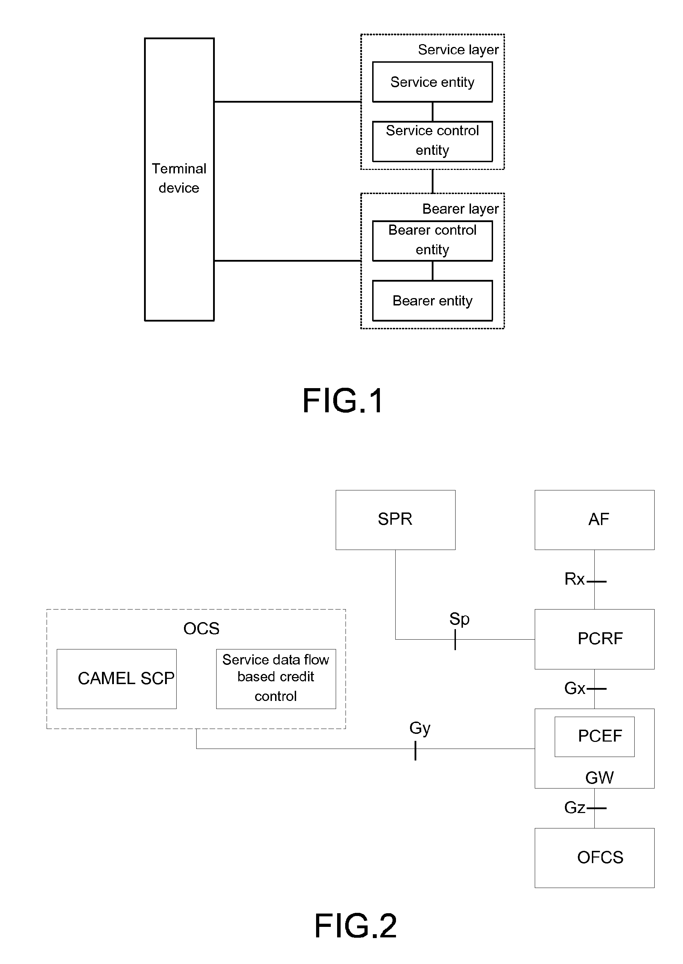

As shown in Figure 1, the NGN network employs a layered architecture, which is divided into a service layer and a transmission layer (bearer layer). The service layer implements a specific service by a service control entity. The transport layer (bearer layer) delivers a specific content via a bearer control entity.

The IP Multimedia Subsystem (IMS) is a component of NGN architecture defined by Third Generation Partner Project (3GPP) R5 or R6 standard. It features in service control functionality. The IMS employs an IP packet domain as a bearer channel for signaling control and media transmission. The IMS employs the session initiation protocol (SIP) as call control signaling so as to separate the service management, session control and bearer access.

Furthermore, the architecture of the existing policy and charging control (PCC) is illustrated in Figure 2. Referring to Figure 2, the PCC architecture includes a Subscription Profile Repository (SPR), an Application Function (AF), a Policy and Charging Rules Functions (PCRF), a gateway including Policy and charging Enforcement Functions (PCEF), an Offline Charging System (OFCS), and Online Charging System (OCS) including a Customized Application for Mobile network Enhanced Logic Service Control Point (CAMEL SCP) and a Service Data Flow Based Credit Control.

A traditional charging system is a flow-based charging system without a policy control function in the course of charging fees. In a PCC system shown in Figure 2, a flow-based charging and a policy control function are combined. The PCRF combines a policy decision function (PDF) to perform policy control. Details of service related information can be acquired through SPR. The SPR stores user's subscription information, which equals a database in a bearer layer.

In addition, the digital subscriber line (xDSL) is a manner of broadband access. A common one is an Asymmetric Digital Subscriber Line, etc. In an xDSL network, there are mainly two types of access devices, namely, a Digital Subscriber Line Access Multiplexer (DSLAM) and a Broadband Remote Access Server (BRAS), which are responsible for connecting the user to the network. These two types of devices both function as bearer layer devices in an NGN network.

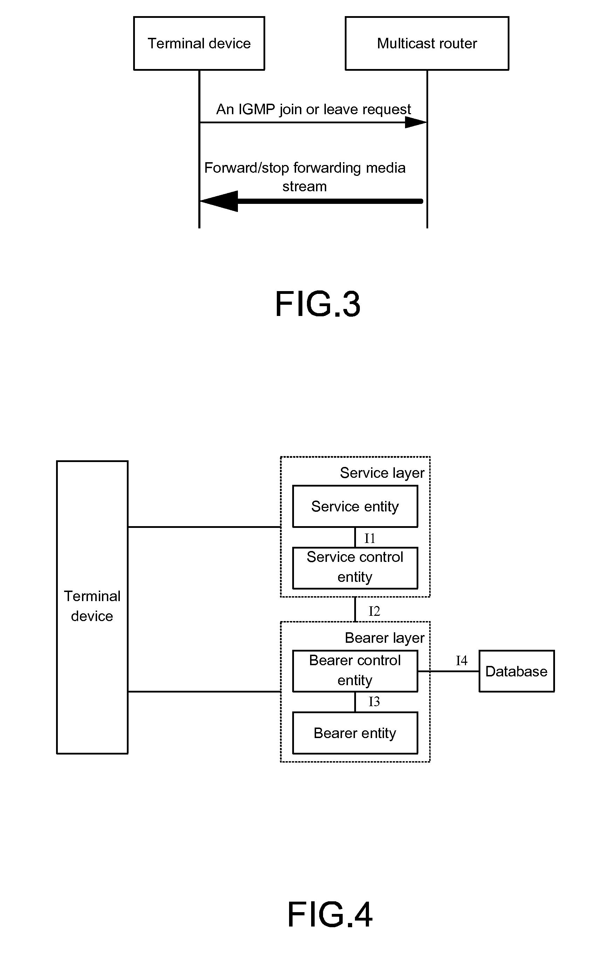

As shown in Figure 3, in an existing system, the terminal device sends an IGMP Join or Leave request directly to a multicast router to join or quit a certain channel. After receiving the IGMP Join request, the multicast router of an adjacent user terminal in the network forwards a program of a corresponding channel directly to the terminal device without checking whether the user is authorized. Likewise, when the multicast router receives an IGMP Leave message and if the multicast router discovers that the user is a last user to watch the channel, the multicast router no longer forwards the programs of the channel and does not perform authorization check on the user, either.

Since the network entities for handling related IGMP messages, e.g., the multicast router, does not perform authorization check on the IGMP message from the user when the user joins or leaves a certain channel via IGMP protocol, a user which is not authorized to watch a certain program may illegally watch the TV program by sending an IMGP Join message, thus pirating the IPTV live service. Likewise, a malicious user may let a legal user unable to continue watching a TV program by sending an IGMP Leave message. As a result, the IPTV live service may not be deployed properly, thus deteriorating user experience of the service.

### SUMMARY

In view of this, the present invention provides a method for channel authorization in a live IPTV service so that the authorization on the channel request with respect to live IPTV service is achieved. The present invention also provides a system for channel authorization in a live IPTV service. The present invention further provides an apparatus for channel authorization in a live IPTV service.

To fulfill the above objects, the method for channel authorization in a live IPTV service according to an embodiment of the present invention includes:
receiving, by a service entity, a channel request for a live IPTV service from a terminal device;
performing, by an authorization entity, an authorization check on the channel request based on user rights information; and
enabling, by the authorization entity, a bearer entity to execute the channel request from the terminal device, if the authorization check is passed.

The system for channel authorization in a live IPTV service according to an embodiment of the present invention includes:
an authorization entity, configured to check, based on user rights information, whether a channel request from a terminal device is authorized; and
a bearer entity, configured to execute the channel request from the terminal device, if the authorization check is passed.

The apparatus for channel authorization in a live IPTV service according to an embodiment of the present invention includes:
a receiving unit, configured to receive a channel request for a live IPTV service from a terminal device, and forward the channel request to an authorization checking unit; and
the authorization checking unit, configured to check, based on the user rights information, whether the channel request is authorized.

As can be seen from the foregoing solutions, based on an NGN network, the present invention provides a method, system and apparatus for performing an authorization check on a channel request from a user for a live IPTV service. According to an embodiment of the present invention, the authorization entity performs authorization on the channel request and executes the channel request only when the authorization check is passed; otherwise, the channel request is rejected. Hence, the problem in the prior art that an unauthorized user is able to watch the program illegally can be addressed. Moreover, the problem that a legal user is not able to watch program due to a malicious leave message sent by others can be avoided. Therefore, embodiments of the present invention combine closely the NGN features with the setup procedure of the live IPTV service to solve the problem of channel authorization, thereby paving the way for the deployment of the live IPTV service in an NGN network.

### BRIEF DESCRIPTION OF THE DRAWINGS

Figure 1 illustrates an NGN architecture;

Figure 2 illustrates a network architecture for a PCC;

Figure 3 illustrates a flowchart of joining or leaving a certain channel in the IPTV live service in the prior art;

Figure 4 illustrates a system block diagram according to an embodiment of the present invention;

Figure 5 illustrates a flowchart of a method according to an embodiment of the present invention;

Figure 6 illustrates a flowchart of a method according to an embodiment of the present invention;

Figure 7 illustrates a flowchart according to a first embodiment of the present invention;

Figure 8 illustrates a flowchart according to a second embodiment of the present invention;

Figure 9 illustrates a flowchart according to a third embodiment of the present invention;

Figure 10 illustrates a flowchart according to a fourth embodiment of the present invention;

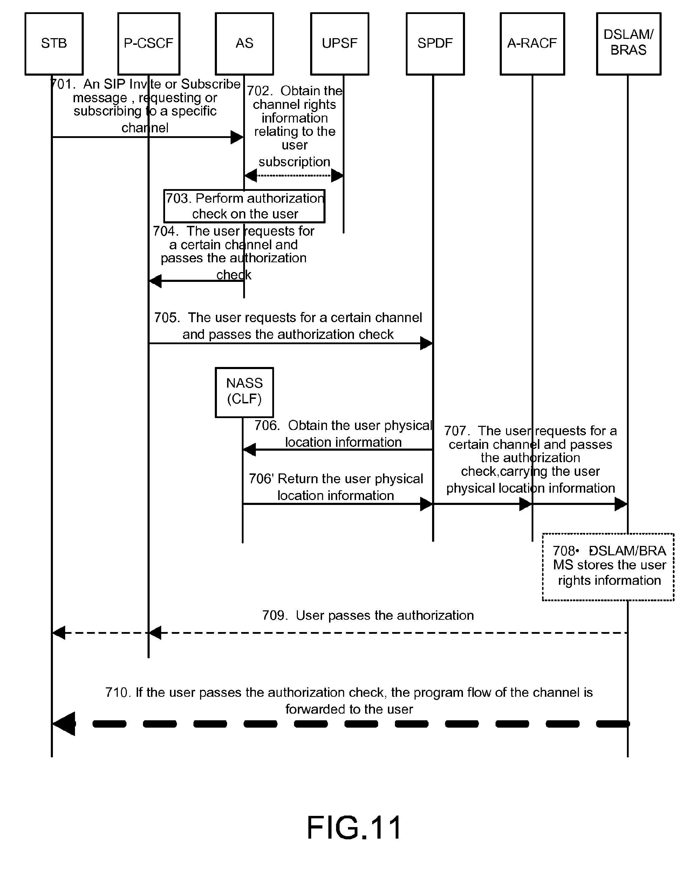

Figure 11 illustrates a flowchart according to a fifth embodiment of the present invention; and

Figure 12 illustrates a block diagram of an authorization entity according to an embodiment of the present invention.

### DETAILED DESCRIPTION

The purposes, technical solutions and advantages concerning the embodiments of the present invention will become more readily appreciated by reference to the following description of the embodiments.

Considering the fact that the bearing and service are separated in an NGN, the idea of the present invention is that a service layer entity obtains user rights information based on a channel request from the user and indexes IDs using a certain type of user ID. Then, the user rights information is delivered to a bearer layer entity via static configuration or dynamic delivery. The bearer layer entity verifies the channel request from the user based on the user rights information. That is, the bearer layer entity may execute a corresponding channel request only for an authorized user and rejects the channel request from an unauthorized user. In addition, in an embodiment of the present invention, the service layer entity may directly perform an authorization check on the channel request from the user. If the authorization is passed, the service layer entity informs the bearer entity to execute the channel request from the user; otherwise, the service layer entity rejects the channel request from the user. In other words, in an embodiment of the present invention, the authorization entity may be a bearer layer entity or a service layer entity. The authorization entity may authorize the channel request from the terminal device based on the user rights information, and the bearer entity executes the channel request from the terminal device when the authorization check is passed.

As illustrated in Figure 4, a system according to an embodiment of the present invention may include a terminal device, a service layer entity including a service entity and a service control entity, a bearer layer entity including a bearer entity and a bearer control entity. The system may further include a database directly or indirectly connected to the bearer control entity. The terminal is configured to initiate a channel request, for instance, a request for a program flow of a channel, a request for leaving or joining a channel. The bearer control entity may be a service-based policy decision function (SPDF) or an access-resource and admission control function (A-RACF) in Telecommunications and Internet converged Services and Protocols for Advanced Networking (TISPAN), or a PDF in 3GPP or a PCEF in PCC system. The database may be an entity in a Network Attachment Sub-System (NASS) in TISPAN, e.g., a CLF, a PDBF; or an SPDF in RACF or an A-RACF; or an SPR in PCC; or an independent database coupled to the bearer control entity.

Compared with the prior art, each entity in Figure 4 is provided with some new functions. The added functions of the service entity include receiving a channel request from a terminal device and obtaining the user rights information. The added functions of the service control entity include forwarding user rights information to the bearer control entity and performing conversion between the service layer ID and the bearer layer ID. The service layer ID may include IP Multimedia Public Identity (IMPU), etc. The bearer layer ID may include IP address, etc. The added functions of the bearer control entity includes receiving user rights information delivered by the service layer; associating the user rights information with the channel request of a user bearer layer and performing an authorization check. The added functions of the bearer entity include receiving user rights information delivered by the service layer; associating the user rights information with the channel request of a user bearer layer and performing an authorization check. In addition, a database directly or indirectly coupled to the bearer control entity is also introduced into the conventional architecture. The database is primarily used to store the user rights information corresponding to the user.

In the system shown in Figure 4, an interface I1 between the service entity and the service control entity, an interface I2 between the service control entity and the bearer control entity, and an interface I3 between the bearer control entity and the bearer entity may be used to query and deliver the user rights information. An interface I4 between the bearer control entity and the database may realize the query of the user rights information and response to the query. The above I1, I2, I3, and I4 interfaces may be newly added interfaces or may be existing interfaces which implement the foregoing functions.

Based on the above architecture, two approaches for authorization check performed by the bearer layer entities are presented below.

In an NGN network environment, the bearing and service are separated. The service layer entity obtains user's channel rights information upon a request from the user and utilizes a certain type of user ID to index the user ID. The user's channel rights information may be delivered to the bearer layer entity by static configuration and dynamic delivery. The bearer layer entity checks the user channel rights based on this information. That is, the bearer layer entity executes a corresponding request only for an authorized user and rejects the channel request from an unauthorized user.

Specifically, the bearer layer entity may be a bearer entity or a bearer control entity. The bearer entity may be a DSLAM, a BRAS, a Gateway GPRS Support Node (GGSN), a Broadcast and Multicast Service (BCMCS) Support Node (BSN), an IP Encapsulator (IPE), etc. The bearer control entity may be an SPDF entity, a PDF entity, and a PCEF, etc.

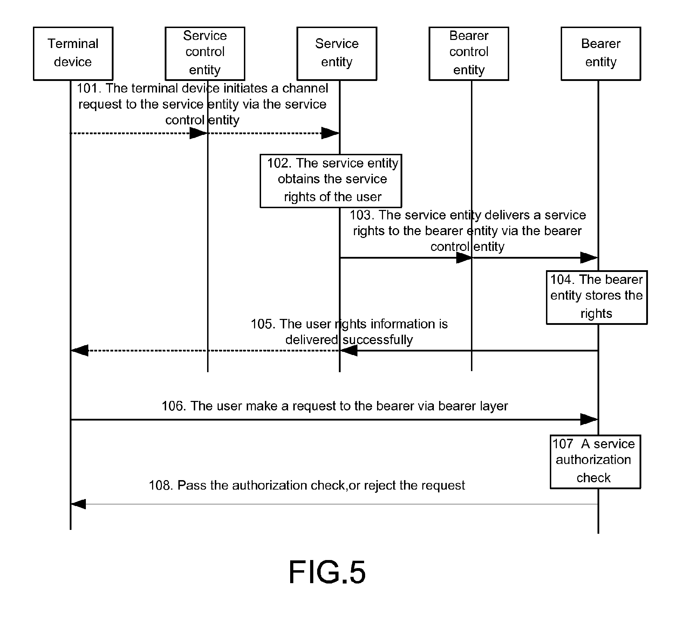

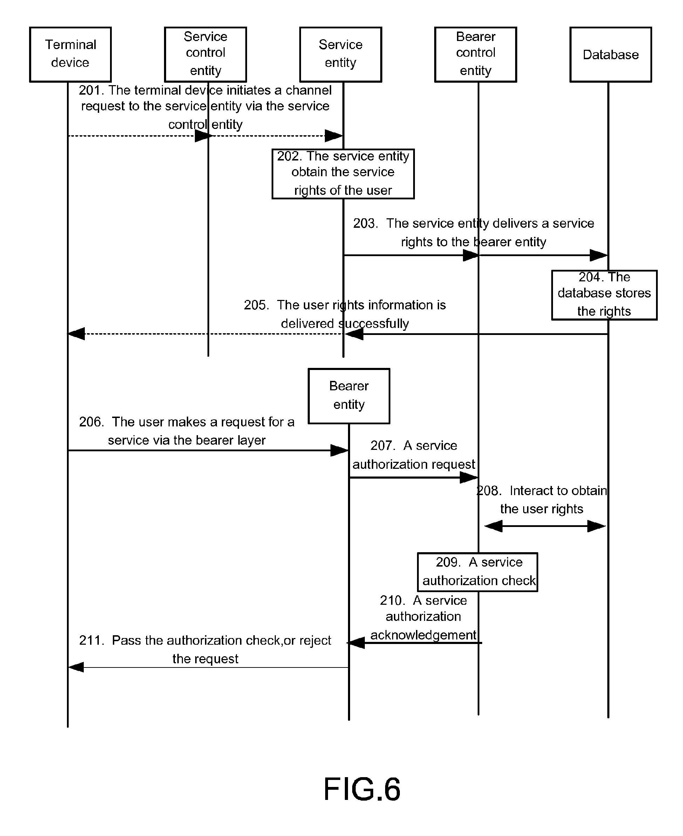

The method shown in Figure 5 is to deliver the user rights information to the bearer entity which is a bearer layer entity. However, the method shown in Figure 6 is: delivering the user rights information to the database, performing, by the bearer control entity, the authorization check.

The procedure illustrated in Figure 5 is described below.

In step 101, the terminal device initiates a channel request to a service entity via a service control entity.

In step 102, the service entity obtains details of the user rights information.

In step 103, the service entity delivers the rights information of the user, i.e., user rights information, to the bearer entity via the bearer control entity.

In step 104, the bearer entity stores the delivered user service rights information. Of course, the user service rights may also be configured statically on the bearer layer entity.

In step 105, the bearer entity informs the service entity that the user rights information is delivered successfully, and the terminal device may also be informed.

In step 106, the user may send, via the bearer layer, a request for a service, from the terminal device to the bearer entity.

In step 107 to step 108, the bearer entity may check to see whether the user is authorized based on the stored user rights information. The bearer entity executes a corresponding request for the authorized user and rejects the request from the unauthorized user.

The procedure illustrated in Figure 6 is described below.

In step 201, the terminal device initiates a service request to the service entity via the service control entity.

In step 202, the service entity obtains the user service rights information.

In step 203, the service entity delivers the user service rights information to the bearer control entity. The bearer control entity sends the user service rights information to the database.

In step 204, the database stores the delivered user service rights information. Of course, the user service rights may also be configured statically in the database.

In step 205, the database informs the service entity that the user rights information is delivered successfully, and the terminal device may also be informed.

In step 206, the user may send, via the bearer layer, a request for a service from the terminal device to the bearer entity.

In step 207, the bearer entity sends a service authorization request to the bearer control entity.

In step 208, the bearer control entity interacts with the database to obtain the user service rights information.

In step 209, the bearer control entity may check to see whether the user is authorized based on the obtained user service rights information, and send the result, i.e., whether or not to permit the user channel request, to the bearer entity via a service authorization acknowledgement.

In step 210, the bearer entity executes a corresponding request for an authorized user based on the authorization result and rejects the request from unauthorized user.

Following changes can be made to the above procedure: In step 207, the bearer entity may forward the IGMP message from the user equipment to the bearer control entity. In subsequent steps, the bearer control entity may perform an authorization check, and inform the bearer entity whether or not to permit the user's request for joining a channel.

As can be seen from Figure 5 and Figure 6, at the beginning of step 106 or step 206, the user may request a media stream from a bearer layer entity, such as a DSLAM or a GGSN, etc., via an IGMP message at the bearer layer. If the bearer layer entity has the rights information of this user, the authorization check is performed immediately, which equals to steps 107 to 108. If the bearer layer entity does not have the rights information of this user, the bearer layer entity may request a channel authorization from the bearer control entity, such as an SPDF or a PDF.

If the bearer control entity stores the user's channel rights information, the authorization check is performed immediately, which equals to steps 208 to 211. If the bearer control entity does not store the user's channel rights information, the bearer control entity may initiate a request to the service layer, requesting the user channel rights information. After the user channel rights information is obtained, the authorization check is performed. Further, the bearer layer entity may also initiate a request to the service layer via an interface interfacing with the service layer, e.g., Gmb interface of Multimedia Broadcasting Multicast System (MBMS), requesting the user channel rights information. After the user channel rights information is obtained, the authorization check is performed.

According to the above description, the authorization check on the user channel request is described with respect to different bearer network environments.

### Embodiment 1

In an xDSL network, the user's channel rights information may be delivered to a DSLAM or a BRAS by static configuration or dynamic delivery. When the DSLAM or the BRAS receives the IGMP message, the DSLAM or the BRAS may check to see whether the user channel request is authorized based on the above rights information.

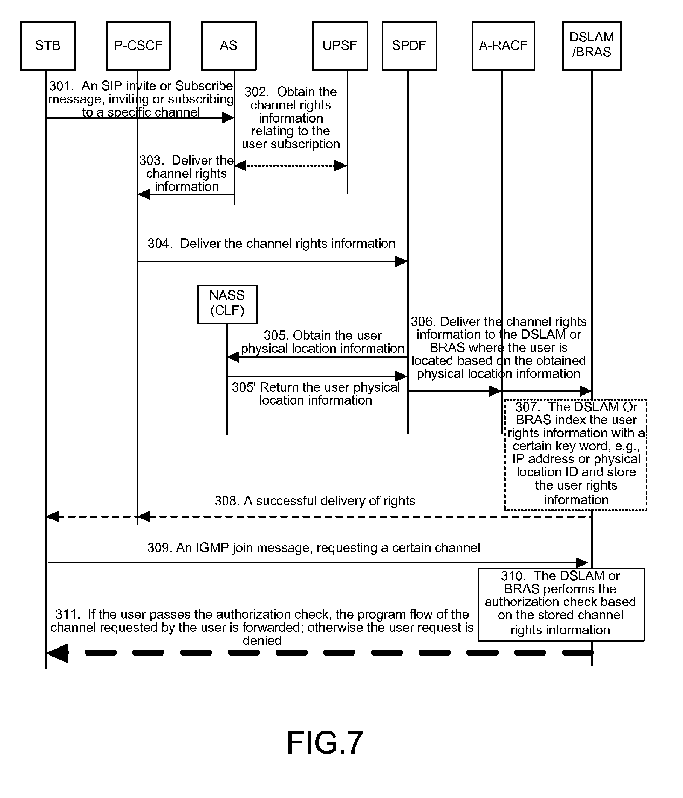

Figure 7 is a schematic flowchart according to the first embodiment. In Figure 7, the entity involved includes a set top box (STB), a proxy-call session control function (P-CSCF) entity, an application server (AS), a user profile server function (UPSF), a service-based policy decision function (SPDF), an access-resource admission control function (A-RACF), and a DSLAM or a BRAS.

Referring to Figure 7, the procedure according to the first embodiment of the present invention is illustrated below.

In step 301, the STB sends an SIP Invite message or an SIP Subscribe message to an AS, requesting or subscribing to a specific channel.

In step 302, if the user rights information is stored in the UPSF, the AS may obtain, from the UPSF, the channel rights information relating to the user subscription.

In step 303, the AS delivers the channel rights information to the P-CSCF.

In step 304, the P-CSCF forwards the above message to the SPDF.

In step 305 to step 305', the SPDF obtains user physical location information from the NASS. The NASS returns the user physical location information, such as LineID, to the SPDF.

It should be noted that the NASS herein may be a network attachment system in the TISPAN. If it is in the ITU-T, the network attachment system may be a network attachment control function (NACF) entity.

In step 306, the SPDF may deliver the channel rights information via A-RACF to the DSLAM or the BRAS where the user is located, based on the obtained physical location information.

In step 307, the DSLAM or the BRAS may store the user rights information, with a certain key word, e.g., an IP address or a physical location ID, as an index.

In step 308, the DSLAM or the BRAS may further send, via the P-CSCF, a message indicating a successful delivery of rights information to the STB.

In step 309, the STB may send an IGMP Join message to the DSLAM or BRAS, requesting a certain channel.

In step 310, the DSLAM or the BRAS may perform an authorization check based on the stored channel rights information , and can be associated with LineID or IP address.

In step 311, if the user passes the authorization check, the program flow of the channel requested by the user is forwarded. If the user does not pass the authorization check, the user request is rejected.

In the foregoing procedure, step 304 to step 305' may also be performed in the following ways. The P-CSCF queries the NASS and obtains the user physical location information. Then, the P-CSCF forwards the channel rights information and physical location information to the SPDF.

In step 307, after the bearer entity, the DSLAM or the BRAS, receives the delivered user rights information, it uses a certain key word as an index to store the rights information so that after the IGMP message from the user is received, the bearer entity can associate the IGMP message with the delivered channel rights information at step 301 and find the corresponding channel rights information of the user, rather than a channel rights information of another user. The key word can be a physical location ID, e.g., LineID of the DSLAM, or an IP address of the user. When only the IP address of the user is used, step 305 to step 305' can be skipped.

### Embodiment 2

In an xDSL network, the channel rights information may be delivered to an SPDF or a database in the bearer layer via static configuration or dynamic delivery. When the DSLAM or BRAS receives the IGMP message, the DSLAM or BRAS may request the SPDF or the database in the bearer layer to authenticate the user channel rights.

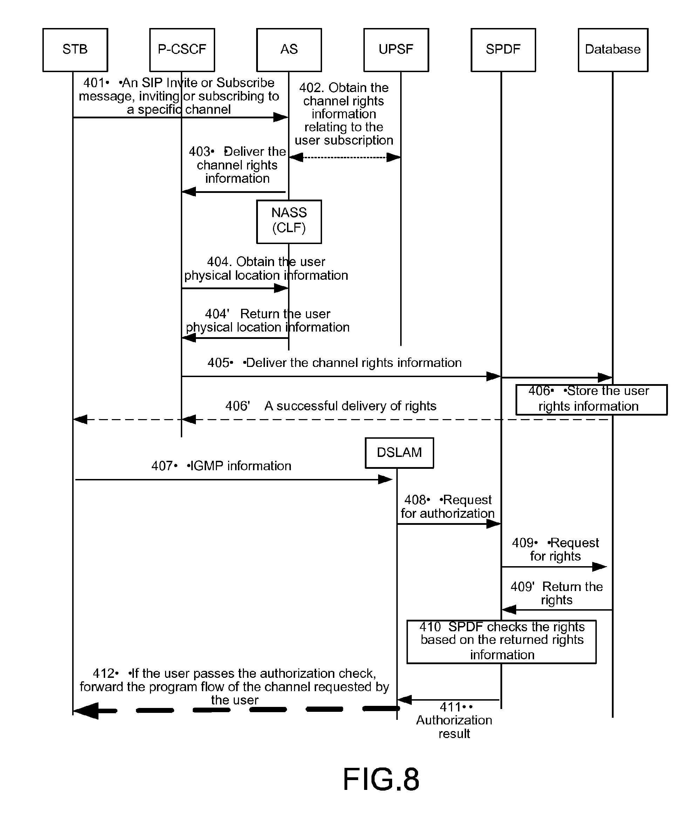

Figure 8 illustrates a flowchart according to the second embodiment. Referring to Figure 8, the procedure includes the following steps.

In step 401, the STB sends an SIP Invite message or an SIP Subscribe message to an AS, requesting or subscribing to a specific channel.

In step 402, if the user rights information is stored in the UPSF, the AS may obtain, from the UPSF, the channel rights information relating to the user subscription.

In step 403, the AS delivers the channel rights information to the P-CSCF.

In step 404 to step 404', the P-CSCF obtains user physical location information from the NASS based on IP address. The NASS returns the user physical location information, such as LineID, to the P-CSCF.

In step 405, the P-CSCF channel rights information and physical location information may be forwarded to the SPDF. The SPDF then forwards the information to the database.

In step 406, the database may store the user rights information, with a certain key word, e.g., an IP address or a physical location ID, as an index.

In step 406', the database sends, via the P-CSCF, a message indicating a successful delivery of rights information to STB.

In step 407, the STB may send an IGMP Join message to the DSLAM, requesting a certain channel.

In step 408, the DSLAM sends a service authorization request to the SPDF.

In step 409 to step 409', SPDF may request the user service rights from the database. The database may return the user service rights information to the SPDF.

In step 410, the SPDF may check the user service rights based on the returned user service rights information.

In step 411, SPDF may send to the DSLAM the authorization result, i.e., whether or not to permit the user channel request.

In step 412, the DSLAM may perform a corresponding operation based on the authorization result. That is, if the user passes the authorization check, the DSLAM may forward the program flow of the channel requested by the user, to the STB; otherwise, the DSLAM may reject the request from the unauthorized user.

### Embodiment 3

In the PCC architecture, the channel rights information may be delivered to the SPR via static configuration or dynamic delivery. When GGSN receives the IGMP message, the GGSN may send a request to PCEF for verifying the user channel rights. The PCEF obtains user channel rights information from SPR and performs channel authorization check. Alternatively, the PCEF may be a PDF. The following description is focused on PCEF.

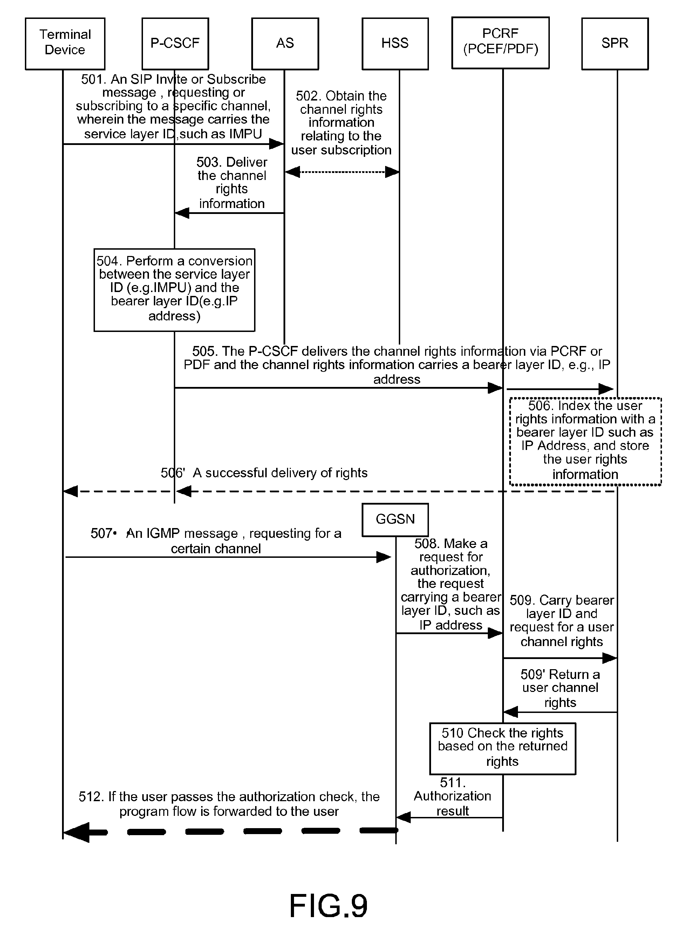

Figure 9 illustrates a flowchart according to the third embodiment of the present invention. Referring to Figure 9, the procedure may include the following steps.

In step 501, the terminal sends an SIP Invite message or an SIP Subscribe message to an AS, requesting or subscribing to a specific channel.

In step 502, if the subscription information is stored in a Home Subscriber Server (HSS), the AS may obtain, from the HSS, the channel rights information relating to the user subscription.

In step 503, the AS delivers the channel rights information to the P-CSCF.

In step 504, the P-CSCF performs conversion between the service layer ID and the bearer layer ID. The service layer ID may be an IMPU. The bearer layer ID may be an IP address.

In step 505, the P-CSCF delivers the channel rights information to SPR via a PCRF or a PDF. And, the information carries a bearer layer ID, e.g., an IP address.

In step 506, the SPR may store the user rights information, with a bearer layer ID such as an IP address, as an index.

In step 506', the SPR sends, via P-CSCF, a message indicating a successful delivery of rights information to the terminal.

In step 507, the terminal may send an IGMP Join message to the GGSN, requesting a certain channel.

In step 508, GGSN may initiate a service authorization request to the PCRF or the PDF and carry a bearer layer ID, such as an IP address.

In step 509 to step 509', the PCRF or the PDF carries the bearer layer ID and requests user service rights information from SPR. The SPR returns the user service rights information to the PCRF or the PDF.

In step 510, the PCRF or the PDF may check the user rights based on the returned user service rights information.

In step 511, the PCRF or the PDF may send to the GGSN the authorization result, i.e., whether or not to permit the user channel request.

In step 512, GGSN may perform a corresponding operation based on the authorization result. That is, if the user passes the authorization check, the GGNN may forward the program flow of the channel requested by the user, to the terminal; otherwise, the GGNN may reject the request from the unauthorized user.

### Embodiment 4

In PCC architecture, the channel rights information may be delivered to the PCEF or PDF via static configuration or dynamic delivery. When GGSN receives the IGMP message, the GGSN may send a request to PCEF or PDF for verifying the user channel rights. The PCEF or the PDF performs channel authorization check based on the stored channel rights information.

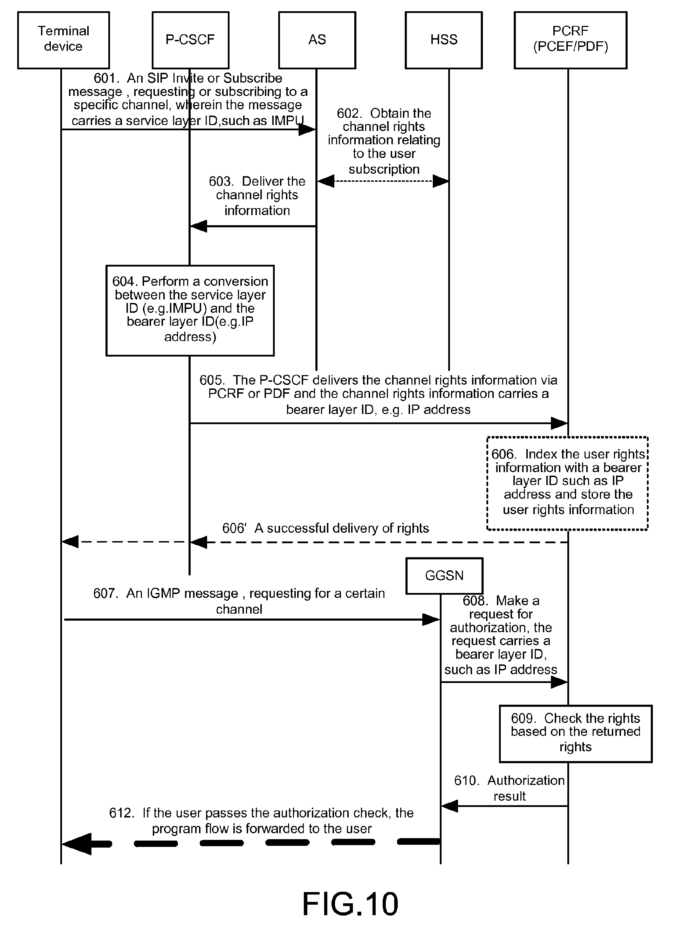

Figure 10 illustrates a flowchart according to the fourth embodiment of the present invention. Referring to Figure 10, the procedure may include the following steps.

In step 601, the terminal sends an SIP Invite message or an SIP Subscribe message to an AS, requesting or subscribing to a specific channel.

In step 602, if the user rights information is stored in an HSS, the AS may obtain, from the HSS, the channel rights information relating to the user subscription.

In step 603, the AS delivers the channel rights information to the P-CSCF.

In step 604, the P-CSCF performs conversion between the service layer ID and the bearer layer ID. The service layer ID may be an IMPU. The bearer layer ID may be an IP address.

In step 605, the P-CSCF delivers the channel rights information to PCRF or PDF. And, the information carries a bearer layer ID, e.g., IP address.

In step 606, the PCRF or the PDF may store the user rights information, with the bearer layer ID such as an IP address, as an index.

In step 606', the PCRF or the PDF sends, via the P-CSCF, a message indicating a successful delivery of rights information to the terminal.

In step 607, the terminal may send an IGMP Join message to the GGSN, requesting a certain channel.

In step 608, GGSN may initiate a service authorization request to the PCRF or the PDF. And, the request carries a bearer layer ID, such as an IP address.

In step 609, the PCRF or the PDF may check to see whether the user is authorized according to the stored user service rights information.

In step 610, the PCRF or the PDF may send to the GGSN the authorization result, i.e., whether or not to permit the user channel request.

In step 611, GGSN may perform a corresponding operation based on the authorization result. That is, if the user passes the authorization check, the GGNN may forward the program flow of the channel requested by the user, to the terminal; otherwise, the GGNN rejects the request from the unauthorized user.

It should be noted that, in the foregoing procedure, the PCEF may carry an ID of the current session in a response to the channel request and send the response to the user, wherein the ID is generated by the PCEF locally. The user may carry the session ID in the IGMP request. Thus, when the GGSN is requesting the PCEF for authorization, the PCEF may perform association via the session ID.

In addition, in the embodiment, since the network may include multiple PCEFs, the PCEFs may carry their respective IDs in a response to the channel request so that the GGSN may send the authorization request to the PCEF according to the PCEF ID when the GGSN requests the PCEF for authorization.

### Embodiment 5

The bearer layer does not trigger the service via IGMP messages. The service layer directly controls the bearer layer entity to authorize user using service signaling.

Figure 10 illustrates a flowchart according to the fifth embodiment of the present invention. Referring to Figure 10, the procedure may include the following steps.

In step 701, the STB sends an SIP Invite message or an SIP Subscribe message to an AS, requesting or subscribing to a specific channel.

In step 702, the AS obtains channel rights information relating to the user subscription from UPSF.

In step 703, the AS checks to see whether the user is authorized according to the obtained channel rights information.

In step 704, the AS sends a message to the P-CSCF. The message is used to inform the bearer entity that the user requests a certain channel and passes the authorization check.

In step 705, the P-CSCF forwards the above message to the bearer control entity SPDF.

In step 706 to step 706', the SPDF sends a message to a CLF in the NASS so as to obtain user physical location information. After the CLF in the NASS receives the message, the CLF returns user physical location information to the SPDF.

In step 707, the SPDF informs the bearer entity, a DSLAM or a BRAS, that the user requests a certain channel and passes the authorization check. In addition, the notification message carries user physical location information.

In step 708, the DSLAM or the BRAS may or may not store the user rights information.

In step 709, the DSLAM or the BRAS sends, to the STB, a response message indicating a successful user authorization or may not send the message.

In step 710, since the user passes the authorization check, the DSLAM or the BRAS may forward, to the STB, the program flow of a channel requested by the user.

In all the foregoing embodiments, by way of example, the user channel rights information is stored in an HSS or a UPSF. In this case, the AS obtains rights information relating to the user subscription from the HSS or the UPSF. In addition, the user rights information may also be stored using another mechanism. For instance, the information may be stored in a service entity AS. In this case, the AS may acquire the rights information locally. Alternatively, the information may be stored in an independent database. In this case, the AS may just need to acquire the rights information from the database.

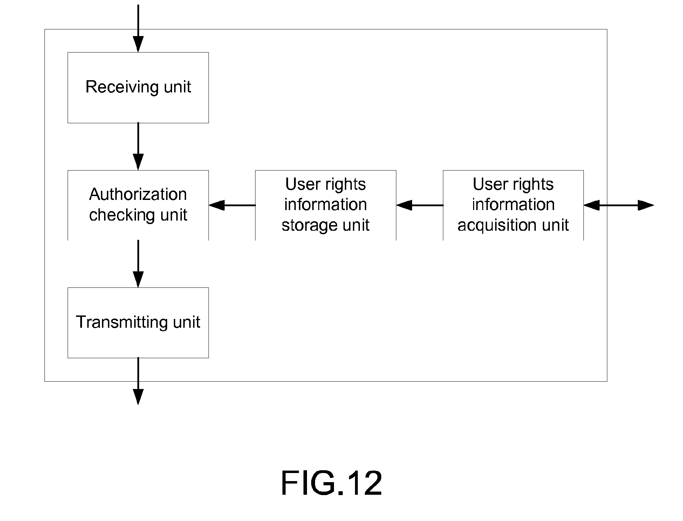

Figure 12 illustrates a block diagram of an authorization entity according to an embodiment of the present invention. The authorization entity is an apparatus for performing channel authorization for the IPTV live service.

Referring to Figure 12, the authorization entity may include at least a receiving unit and an authorization checking unit. The receiving unit receives a channel request for live IPTV service from a terminal and sends the channel request to the authorization checking unit. The authorization checking unit performs an authorization check on the channel request according to the user rights information.

If the authorization entity is not a bearer entity, but a service layer entity or a bearer control entity, the authorization entity may further include a transmitting unit. The transmitting unit may inform the bearer entity to execute the channel request if the result from the authorization checking unit indicates that the authorization check is passed.

If the authorization entity is a bearer entity, the transmitting unit can be omitted. Instead, the authorization entity may further include a service execution unit which is not shown in the figure. The service execution unit is configured to execute the channel request if the result of the authorization check indicates that the authorization check is passed.

As illustrated in Figure 12, the authorization entity may further include a user rights information acquisition unit configured to acquire user rights information from the outside and provide the information to the authorization checking unit.

In the instance where the authorization entity serves as a different entity, the user rights information acquisition unit may perform a different operation. For instance, in the case where the authorization entity is a service layer entity, the user rights information acquisition unit is configured to acquire user rights information from the HSS or the UPSF. In the case where the authorization entity is a bearer control entity, the user rights information acquisition unit is configured to request the user rights information from the service layer or a database. In the case where the authorization entity is a bearer entity, the user rights information acquisition unit is configured to request the user rights information from the service layer or the database. Alternatively, the user rights information acquisition unit may send a request for the user rights information directly to the service layer.

In addition, as shown in Figure 12, the authorization entity may further include a user rights information storage unit configured to store the user rights information and provide the information to the authorization checking unit.

The foregoing are merely preferred embodiments of the present invention, which shall not be construed as limitation to the present invention. Any modifications, equivalents, improvements, etc., made within the spirit and principle of the present invention fall within the scope of the present invention.

## Claims

1. A method for channel authorization in a live IPTV service, **characterized in** comprising:
receiving, by a service entity, a channel request for a live IPTV service from a terminal device;
performing an authorization check, by an authorization entity, on the channel request based on user rights information; and
enabling, by the authorization entity, a bearer entity to execute the channel request from the terminal device if the authorization check is passed.

2. The method of claim 1, **characterized in** further comprising: rejecting the channel request from the terminal device, if the authorization check is not passed.

3. The method of claim 1, **characterized in that**,
the authorization entity is a service layer entity or a bearer layer entity; and
before the authorization entity performs the authorization check, the method further comprises: configuring the user rights information at the authorization entity.

4. The method of claim 1, **characterized in that**,
the authorization entity is a bearer layer entity; and
before the authorization entity performs the authorization check, the method further comprises: configuring the user rights information at a database; and obtaining, by the bearer layer entity, the user rights information from the database.

5. The method of claim 4, **characterized in that**, the bearer layer entity is a bearer entity, and the obtaining, by the bearer layer entity, the user rights information from the database comprises:
sending, by the bearer entity, an authorization request to a bearer control entity;
obtaining, by the bearer control entity, the user rights information from the database; and sending the user rights information to the bearer entity.

6. The method of claim 4, **characterized in that**, the bearer layer entity is a bearer control entity.

7. The method of claim 1, **characterized in that**, the authorization entity is a bearer layer entity; and
before receiving the channel request for the live IPTV service from the terminal device, the method further comprises:
receiving, by the service entity, a request or subscription message which is used to request or subscribe to the live IPTV service, wherein the request or subscription message is initiated by the terminal device;
obtaining user rights information from an Home Subscriber Server, HSS, a User Profile Server Function UPSF entity, the service entity or from a database storing the user rights information; and
delivering the user rights information to the bearer layer entity.

8. The method of claim 7, **characterized in that**, the bearer layer entity is a bearer entity.

9. The method of claim 1, **characterized in that**, the authorization entity is a bearer entity; and
before receiving the channel request for the live IPTV service from the terminal device, the method further comprises:
receiving, by the service entity, a request or subscription message which is used to request or subscribe to the channel of live IPTV service, wherein the request or subscription message is initiated by the terminal device;
obtaining user rights information from the HSS, the UPSF, service entity, or from a database storing the user rights information;
delivering the user rights information to a bearer control entity;
storing, by a bearer control entity, the user rights information to the database;
before the authorization entity performs the authorization check, the method further comprises:
sending, by the bearer entity, an authorization request to the bearer control entity;
obtaining, by the bearer control entity, the user rights information from the database; and
delivering the user rights information to the bearer entity.

10. The method of claim 7, **characterized in that**, the bearer layer entity is a bearer control entity.

11. The method of claim 10, **characterized in that**, before the authorization entity performs the authorization check, the method further comprises:
storing, by the bearer control entity, the user rights information to the database; and
obtaining, by the bearer control entity, the user rights information from the database.

12. The method of claim 1, **characterized in that**, the authorization entity is an bearer entity; and
before receiving the channel request for the live IPTV service from the terminal device, the method further comprises:
receiving, by the service entity, a request or subscription message which is used to request or subscribe to the live IPTV service, wherein the request or subscription message is initiated by the terminal device;
obtaining user rights information from an HSS, a UPSF, the service entity or from a database storing the user rights information; and
delivering the user rights information to a bearer control entity;
before the authorization entity performs the authorization check, the method further comprises:
sending, by the bearer entity, an authorization request to the bearer control entity;
sending, by the bearer control entity, the user rights information to the bearer entity.

13. The method of claim 7, **characterized in that**, before receiving the channel request for the live IPTV service from the terminal device, the method further comprises:
sending, by a bearer layer entity, a current session ID or ID of the bearer layer entity to the terminal device; and carrying, by the terminal device, the current session ID or ID of the bearer layer entity when the terminal device initiates a request.

14. The method of claim 7, **characterized in that**, the user rights information stored by the bearer layer entity is indexed by a service layer ID or a bearer layer ID;
when the user rights information is indexed by the bearer layer ID, the method further comprises: converting, by a service control entity or a bearer control entity, the service layer ID to the bearer layer ID in the process of delivering user rights information.

15. The method of claim 9, **characterized in that**, the user rights information stored in the database is indexed by a service layer ID or a bearer layer ID;
when the user rights information is indexed by the bearer layer ID, the method further comprises: converting, by the service control entity or the bearer control entity, the service layer ID to the bearer layer ID in the process of delivering user rights information.

16. The method of claim 14 or 15, **characterized in that**,
the service layer ID is an IP Multimedia Public Identity (IMPU); or
the bearer layer ID is an IP address of the terminal device or physical location ID of the terminal; or
the physical location ID is LineID in a Digital Subscriber Line Access Multiplexer DSLAM.

17. The method of claim 1, **characterized in that**, the authorization entity is a bearer control entity; and before the authorization entity performs the authorization check, the method further comprises:
requesting, by the bearer control entity, the user rights information from the service entity via the bearer control entity, a service control entity;
obtaining, by the service entity, user rights information from an HSS, a UPSF, the service entity or from a database storing the user rights information; and
delivering the user rights information to the bearer control entity via the service control entity and the bearer control entity.

18. The method of claim 1, **characterized in that**, the authorization entity is a bearer entity; and before the authorization entity performs the authorization check, the method further comprises:
requesting, by the bearer entity, the user rights information from the service entity via the service control entity;
obtaining, by the service entity, the user rights information from an HSS, a UPSF, the service entity or from a database storing the user rights information; and
delivering the user rights information to the bearer entity via the service control entity.

19. The method of claim 18, **characterized in that**, in a multimedia broadcasting multicast system (MBMS), the bearer entity communicates with the service control entity via a Gmb interface.

20. The method of claim 1, **characterized in that**, the authorization entity is a bearer control entity; and before the authorization entity performs the authorization check, the method further comprises:
requesting, by the bearer control entity, the user rights information from the service entity via the service control entity;
obtaining, by the service entity, the user rights information from an HSS, a UPSF, the service entity or from a database storing the user rights information; and
delivering the user rights information to the bearer control entity via the service control entity.

21. The method of claim 1, **characterized in that**, the authorization entity is a service layer entity; and the performing, by the authorization entity, the authorization check and the executing, by the bearer layer entity, the channel request when the authorization check is passed further comprise:
obtaining, by the service layer entity, the user rights information from an HSS, a UPSF, the service entity itself, or a database storing the user rights information;
performing authorization on the channel request based on the user rights information;
informing the bearer entity of the user's channel request and a success of the authorization check, if the authorization check is passed; and executing, by the bearer entity, the channel request.

22. The method of claim 21, **characterized in that**, the service layer entity is a service entity.

23. The method of claim 21, **characterized in that**, in the process of informing of the user's channel request and the success of the authorization check, a service control entity or a bearer control entity obtains the bearer layer ID from a network attachment system and informs the bearer layer ID to the bearer entity;
wherein the network attachment network is a network attachment subsystem in Telecommunications and Internet converged Services and Protocols for Advanced Networking (TISPAN) and the network attachment network is a network attachment control function (NACF) entity in ITU-T.

24. The method of claim 14, 15 or 23, **characterized in that**,
the service control entity is a proxy-call session control function (P-CSCF) entity in IP multimedia subsystem (IMS); or
the bearer control entity is a service-based policy decision function (SPDF) entity, or an access-resource and admission control function (A-RACF) entity, or a policy decision function (PDF) entity, or a policy and charging enforcement function (PCEF) entity.

25. The method of claim 1, **characterized in** further comprising:
informing, by the authorization entity, the terminal device of a successful delivery of the user rights information.

26. The method of claim 1, **characterized in** further comprising:
storing the user rights information after the authorization entity receives the user rights information.

27. The method of claim 1, **characterized in that**, the channel request comprises a request for a program flow of a channel, a request for leaving, joining or switching a channel.

28. The method of claim 27, **characterized in that**, the channel request employs the Internet Group Management Protocol (IGMP) or the Multicast Listener Discovery (MLD) protocol.

29. A system for channel authorization in a live IPTV service, **characterized in** comprising:
an authorization entity, configured to check whether a channel request from a terminal device is authorized based on user rights information; and
a bearer entity, configured to execute the channel request from the terminal device, if the authorization check is passed.

30. The system of claim 29, **characterized in that**, the authorization entity further comprises a unit for rejecting the channel request from the terminal device, if the authorization check is not passed.

31. The system of claim 29, **characterized in that**, the authorization entity is a bearer layer entity; and the system further comprises:
an HSS or UPSF, configured to store user rights information, and a service entity, configured to obtain user rights information from the HSS or UPSF, and deliver the user rights information to a bearer layer entity; or
a service entity, configured to store user rights information, obtain the user rights information from itself and deliver the user rights information to the bearer layer entity; or
a database, configured to store user rights information, and a service entity, configured to obtain user rights information from the database storing the user rights information and, deliver the user rights information to the bearer layer entity.

32. The system of claim 31, **characterized in that**, the bearer layer entity is a bearer entity.

33. The system of claim 32, **characterized in that**, the bearer entity is a Digital Subscriber Line Access Multiplexer (DSLAM), a Broadband Remote Access Server (BRAS), a Gateway GPRS Support Node (GGSN), a Broadcast and Multicast Service (BCMCS) Support Node (BSN), or an IP Encapsulator (IPE).

34. The system of claim 31, **characterized in that**, the bearer layer entity is a bearer control entity.

35. The system of claim 32 or 34, **characterized in** further comprising: a database, connected to the bearer control entity, and configured to store the delivered user rights information.

36. The system of claim 35, **characterized in that**, the database is a CLF or a PDBF in an NASS; or an SPDF or an A-RACF in an RACF; or an SPR in PCC; or an independent database connected to the bearer control entity.

37. The system of claim 34, **characterized in that**, the bearer control entity is an SPDF in a TISPAN, a PDF in 3GPP or a PCEF in PCC system.

38. The system of claim 31, **characterized in** further comprising: a service control entity or a bearer control entity, configured to perform conversion between a service layer ID and a bearer layer ID in the process of delivering user rights information.

39. The system of claim 38, **characterized in that**, the service control entity is a P-CSCF in an IMS system; or the bearer control entity is an SPDF or an A-RACF in a TISPAN, a PDF in 3GPP, or a PCEF in a PCC system.

40. The system of claim 29, **characterized in that**, the authorization entity is a service layer entity, wherein the service layer entity performs authorization on the channel request based on the configured user rights information or the user rights information obtained from the HSS, UPSF, or the service entity or from the database storing the user rights information, and informs a bearer layer entity of the user's rights request and the success of the authorization check whether the authorization check is passed.

41. An apparatus for channel authorization in a live IPTV service, **characterized in** comprising:
a receiving unit, configured to receive a channel request for a live IPTV service from a terminal device, and forward the channel request to an authorization checking unit;
the authorization checking unit, configured to perform a authorization check on the channel request based on the user rights information.

42. The apparatus of claim 41, **characterized in that**, the apparatus is a service layer entity; and
the service layer entity further comprises at least one of: a transmitting unit and a user rights information acquisition unit, wherein
the transmitting unit is configured to inform the bearer entity to execute the channel request, if the result of the authorization check indicates that the authorization check is passed; and
the user rights information acquisition unit is configured to obtain the user rights information from an HSS, a UPSF, a service entity or a database storing the user rights information.

43. The apparatus of claim 41, **characterized in that**, the apparatus is a bearer control entity; and
the bearer control entity further comprises at least one of: a transmitting unit and a user rights information acquisition unit, wherein
the transmitting unit is configured to inform the bearer entity to execute the channel request, if the result of the authorization check indicates that the authorization check is passed; and
the user rights information acquisition unit is configured to request the user rights information from the service layer or the database.

44. The apparatus of claim 41, **characterized in that**, the apparatus is a bearer entity; and
the bearer entity further comprises at least one of: a service execution unit and a user rights information acquisition unit, wherein
the service execution unit is configured to execute the channel request, if the result of the authorization check indicates that the authorization check is passed; and
the user rights information acquisition unit is configured to request the user rights information from the bearer control entity, service layer or database.

45. The apparatus of any one of claims 41-44, **characterized in** further comprising:
a user rights information storage unit, configured to store the user rights information and provide the user rights information to the authorization checking unit.
